# EUROPEAN PATENT SPECIFICATION

(11) **EP 0 595 284 B1**
(45) Date of publication and mention of the grant of the patent: **12.06.2002**
(21) Application number: 93117386.8
(22) Date of filing: 27.10.1993
(51) Int. Cl.: G08C 25/04, H04Q 9/00, H02J 13/00

(54) **Method of data transmission for telemetry and telecontrols via radio**
Verfahren zur Datenübertragung für die Telemetrie und Telekontrolle via Radio
Méthode pour la transmission de données pour la télémétrie et télécontrôles par radio

(30) Priority: 27.10.1992 IT TO920864
(43) Date of publication of application: 04.05.1994
(73) Proprietor: SOCIETA ITALIANA PER IL GAS p.A., 10121 Torino (IT)
(72) Inventor: Roccato, Marco, I-10126 Torino (IT); Mussino, Franco, I-10138 Torino (IT)
(74) Representative: Dini, Roberto, Dr. Ing.

(56) References cited:
- EP-A- 0 197 835
- EP-A- 0 425 330
- FR-A- 2 660 511
- US-A- 3 973 240

## Description

The present invention refers to a method of data transmission, applicable to distribution systems, in particular of gas, water, electric energy, heat, that provides a central station and a plurality of peripheral stations connected with said central station.

There are known telemetry systems via radio that provide a central station and a plurality of associated peripheral stations with transceivers or "transponders" that transmit via radio the consumption information to the central station and receive commands or messages.

To avoid the necessity of using high power transmitting peripheral stations, it is known the possibility of utilising an equipped vehicle for retrieving the information from peripheral stations and then send it to the central station; systems of this type are for example described in the European Patent Application n. 0 428 322 and in the British Patent Application n. 2 237 910.

Such systems have the drawback of requiring one or more equipped vehicles that continually retrieve data from different peripheral stations; this means that the data is available only after that the programmed run has been completed. Furthermore the vehicle makes connections with each peripheral station being only temporary; for example it is unthinkable that it can also collect alarm signals from them, inasmuch that at the moment of the alarm it will probably be in another zone, out of reach of the interested peripheral station.

From the US Patent n. 5.056.107 is already known a system for receiving remote data from periferal stations connected to a central station through intermediate receiving stations. In this systems the periferal stations transmit data to the intermediate receiving stations via radio and during pseudorandomly selected periods.

This solution creates problems of collisions of two different data information sent by two different periferal stations at the same time and retrieved by the same intermediate receiving station. Also the problem of the battery's comsumption is not optimised.

The aim of the present invention is that of indicating a method of telemetry that eliminates the aforementioned drawbacks of the known systems.

To allow such aims the present invention has as its subject a method as defined in claim 1 and subsequent claims.

Further aims and advantages of the present invention will result in being clear from the detailed description that follows and from the annexed drawings, supplied purely as an explanatory and non-limiting example, wherein:
Figure 1 represents the general diagram of a telemetry system;
Figure 2 represents the general diagram of a telemetry system with additional services;
Figure 3 represents the block diagram of a peripheral unit;
Figure 4 represents the block diagram of a concentrator;
Figure 5 represents the functional block diagram of a multi-service terminal of a portable type;
Figure 6 represents the functional block diagram of a multi-service terminal of a fixed type;
Figure 7 represents the general block diagram of a multi-service
   terminal;
Figure 8 represents a table with the electrical characteristics of the transceiver for the peripheral units;
Figure 9 represents a table with the electrical characteristics of the transceiver for the concentrator;
Figure 10 represents a table with the electrical characteristics of the transceiver for multi-service terminals;
Figure 11 represents three tables with examples of consumption of the batteries of the peripheral unit, the concentrator and the multi-service unit.

A practical example of the method according to the invention will now be described in detail.

### 1) INTRODUCTION

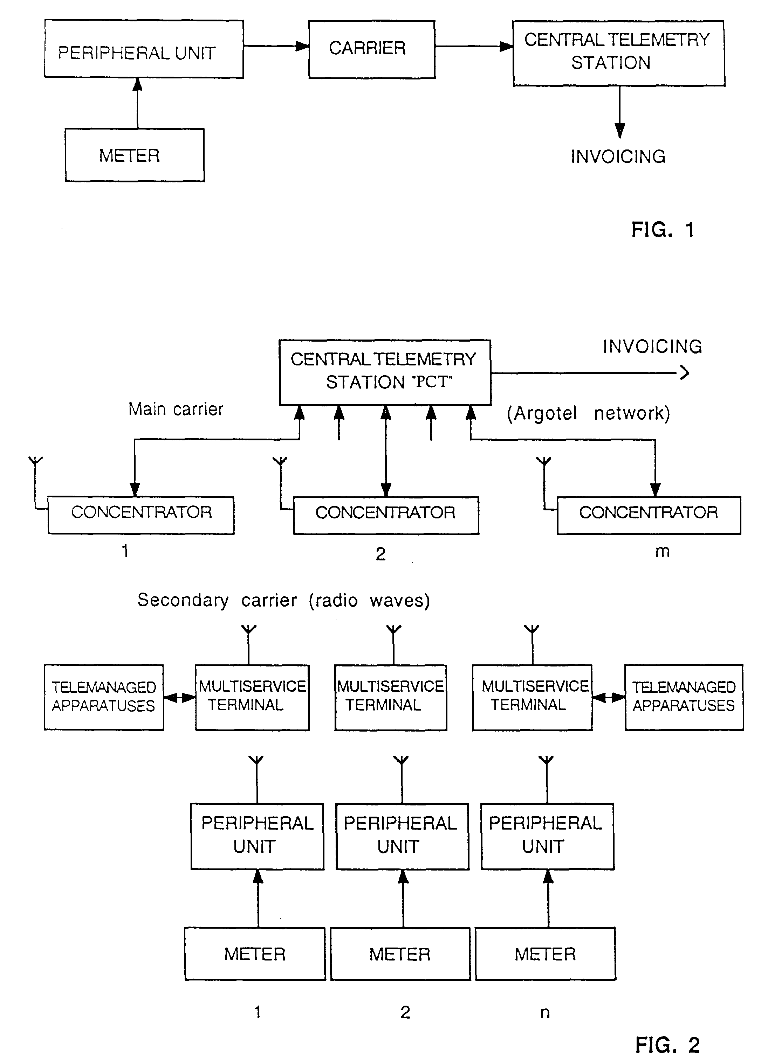

A telemetry system for gas and water meters (but applicable also to those of electric energy or others being similar) is constituted from the following main parts (note Figure 1):
a) an apparatus located near to the meter, named "Peripheral Unit", having the function of an interface with the transmission means or "carrier";
b) a centralised data gathering apparatus, named "Central Telemetry Station" (PCT), the function of which consists in collecting the readings and making them available to the invoicing system;
c) transmission means or "carrier", eventually also being of the type "mixed" (i.e. that uses several kinds of carriers), able to convey acquired data from the Peripheral Unit in the direction of the Central Telemetry Station.

Transmission means or "carriers" used in telemetry systems of meters can be of different types depending on the type of usage (domestic or industrial) and also in relation with other eventual services that can be carried out together with the telemetry.

The "carriers" available today for telemetry can be distinguished in two large categories:
- those utilising a physical support for propagation (cable or optical fibre);
- those utilising the so-called "broadcast" (radio waves) for the propagation.

To the first category belong the telemetry systems that use as a carrier:
- A switched telephone line
- A dedicated line
- A low voltage (BT) or medium voltage (MT) electric line
- A high diffusion telematic network (Argotel network)
- The bi-directional CATV networks
- Optical fibres

To the second category belong the telemetry systems that use as a carrier radio waves, through a:
- mobile means (for example, motor vehicle or "van" )
- fixed and centralised system.

The telemetry system that is herein considered regards domestic use, through a fixed system. In that case it is therefore opportune that data relative to numerous meters be concentrated within apparatuses (said concentrators) before being sent to the PCT.

The concentration operation is advantageous for operative reasons, and above all for reasons of installation and management costs.

Thus, the "path" that supplies data from the meter or (more precisely) from the Peripheral Unit towards the Central Telemetry Station is constituted by two links wherein "carriers" of different types are used.

Such "carriers" can be of two classes:
- primary carriers, that transport the concentrated data to the Central Telemetry Station,
- secondary carriers, that for technical characteristics and economic reasons (low cost), are usable for transporting data from the Peripheral Unit, arranged within the meter, to the concentrator, after which the transportation takes place by the primary carrier.

For domestic telemetry the carriers more suitable, both from a technical viewpoint (speed of transmission and reliability of the reading), and from an economic viewpoint, are:
- among the secondary carriers: radio waves
- among the primary carriers: the ARGOTEL network.

The description regards essentially apparatuses utilising the connection via radio waves; for simplicity sake the connection through the Argotel is not treated here, the implications of which have been taken into account only where necessary.

It is clear that the connection between concentrators and the Central Telemetry Station may be obtained with other means, being different from the Argotel network, such as:
- switched telephone network,
- dedicated lines,
- optical fibres,
- radio links,
- low voltage or medium voltage electric lines,
- cellular telephone,
- ISDN networks (Integrated Service Digital Network),
- bi-directional CATV networks.

As the methodologies of use of such carriers and the relative technologies are known, specific descriptions are not herein supplied.

### 2) FUNCTIONS OF THE TELEMETRY SYSTEM

The installation of a communication system between the Service Provider (gas, water, etc.) and the user by means of a telemetry system, the possiblity of making other functions, besides the telemetry itself, that can be distinguished in two large categories:
a) Basic services, that interest mainly the Service Provider, also improving the quality of the service itself for the users;
b) Additional services, that interest mainly the user and for which the user agrees to pay.

To obtain the maximum flexibility relative to the basic and additional services, it is necessary that the communication be of the bi-directional type.

### 2.1 - Basic services

The basic functions that a communication system between the company and the user can make are:

### 2.1.1 Telemetry with the aims of invoicing.

This is the primary service, that to be economically advantageous requires:
- to minimise investment costs;
- to optimise the reading frequency.

### 2.1.2 Telemetry for technical aims.

The telemetry for technical aims is useful if it executes the following functions:
- measures network dispersions in a careful way; such result is obtainable by means of the programmed reading of meters in established dates and hours;
- measures the global flow (carrying out readings of consumption in close time periods) in different hours of the day in sections of network to be submitted to functional examination;
- careful calculation of coefficients of simultaneity.

In this case the telemetry system must be able to read meters selectively and in the moment desired by the operator.

### 2.1.3 Security.

For obtaining an increase in security it may be useful to introduce a delivery block device, that in the case of gas delivery will be active for:
- anomalous absorption after the meter (gas leak);
- temperature increase (for example: fire);
- earthquake;
- very small flow (similar to the gas escape);
- minimum pressure (with consequent flame loss).

### 2.1.4 Relations with the user.

The introduction of communication means toward the user through a telemetry network also allows the following operations to be carried out:
- tariff management: seasonal
   multi-hour
- messages to the user: tariffs
   consumption
   contractual situation (arrears, etc.)
   service interruption due to works
- gas delivery block for: fraud
   tampering
   arrears.

It is clear that in cases 2.1.3 and 2.1.4, the telemetry system must be equipped with:
- block valve (for example, with manual rearmament for security reasons) and subjected with detector systems of the interested phenomenons and being remote-controllable in the case of blocking for arrears; the reset of the delivery of the supply may be conditioned by an agreement to be sent through the telemetry communications system;
- display screen or "display" for messages;
- sufficient intelligence for locally managing the functions.

### 2.1.5 Telemetry of other supplies.

It is possible that a telemetry system for gas meters can easily be extended to the telemetry of other supplies, such as water, electric energy, heat, obtaining a large scale economy, however with certain complications of the organisational and commercial problems.

### 2.2 - Additional services.

A communication system between the company and the user can carry out the following functions that can be classified as technical tele-services in favour of the user:
- Gas delivery block in the presence of CH4 or CO, or fire
- Anti-intrusion alarm and other alarms
- Pensioner and/or handicapped aid
- Medical assistance
- Management of fire prevention systems
- Energy management (central thermic control, hot water systems, etc.)
- Technical interventions (specialised manpower requests: plumbers, electricians, carpenters, etc.).

It is clear that in the case of additional services the system must be equipped, for each user making a request, with a Multi-service Terminal installed within the premises of the user and sufficiently complex to fulfil the desired functions.

### 3) ARCHITECTURE OF THE TELEMETRY SYSTEM

The structure or architecture of the telemetry system must be such to allow the following functions;
- telemetry
- basic services
- additional services

### 3.1 - Block diagram

The general diagram of the telemetry system according to the invention is represented in fig. 2, where one can see how the telemetry Peripheral Unit works as a communication interface towards the meter, while the tele-managed apparatuses interface with the Multi-service Terminal. Both the Peripheral Unit, and the Multi-service Terminal connect directly (via radio) with the concentrator, while the connection of the concentrator with the PCT takes place through the Argotel network.

### 3.2 - Information to be transmitted

The information to be transmitted between the Peripheral Unit or the Multi-service Terminal and the PCT are the following:
- the meter reading, with the associated identification of the meter, data relative to the Service provider and to the type of delivery;
- data supplied by sensors of different types (temperature, smoke, etc.)
- commands and data sent from the PCT, to actuators or to display information;
- commands and data sent from the Multi-service Terminal.

It is however necessary to distinguish between:
- messages relative only to telemetry,
- messages relative to sensors and actuators
- messages relative to the Multi-service Terminal (additional services and tele-management)
- special messages.

The message relative to the telemetry to be transmitted from the Peripheral Unit towards the PCT can be contained in 128 bits, subdivided, for example, in the following way:
- two bits (sequence 1,0) of "start"
- preamble (24 bits) for carrying out the synchronisation of the receiver
- identification code of the meter (32 bits: 8 digits BCD), i.e. of the user
- meter type (gas, water, electric energy, heat, air conditioner, hot water, etc.) (4 bits: 1 digit BCD)
- consumption (32 bits: 8 digits BCD)
- flow rate (12 bits: 3 digits BCD)
- signalling of tampering, errors, overflow, state of supply or batteries, etc. (4 bits: 16 signalling kinds)
- correction code of errors (CRC) and cryptographic keys (16 bits)
- further information (2 bits)

The quantity of transmitted information by means of the 128 bits can be increased by adopting a binary codification, instead of that in BCD.

The messages relative to the information generated by sensors connected to the Peripheral Unit or to proceed to actuators (also connected to the Peripheral Unit) may still have the structure or the shape previously indicated, simply replacing the bit relative to the meter type, consumption, flow rate and tampering, (in total 52 bits) with specific messages and i.e.:
- for sensors:
- identification of the sensor (8 bits) (256 sensors)
- value of the parameter (16 bits) (4 digits BCD)
- priority (4 bits)
- other information and error correction code (24 bits)
- for actuators:
- identification of the actuator (8 bits) (256 actuators)
- intervention type (4 bits)
- value of the parameter on which to intervene (16 bits)(4 digits BCD)
- other information and error correction code (24 bits).

For messages relative to the Multi-service Terminal considerations similar to the previous are still valid, replacing part of the message of 128 bits (for example, the 52 bits previously indicated) with information of:
- call type (8 bits) (256 call types)
- priority (4 bits) (16 levels of priority)
- type of tele-managed apparatus (8 bits)
- value of the parameter (16 bits)
- other information and error correction code (16 bits).

Finally, the special messages can be of various types, to be defined in the final design release for example, can be distinguished in:
- messages able to redefine initial functions or conditions of the Peripheral Unit or of the Multi-service Terminal
- messages for the user (tariffs, consumption, contractual situation, etc.)

### 3.3 - Conversation protocols

The actual conversation protocols are not reported here, but only indications of criteria and procedures with which the exchange of information between the different units of the telemetry system must take place. The information to be transmitted has been previously indicated.

### 3.3 1 - Peripheral-Concentrator Unit

The transmission between the Peripheral Unit and the Concentrator can take place with different procedures depending on the type of message exchanged.

For messages being relative to the telemetry only, the transmission of the information (reading) takes place on request of the Concentrator. Such a request can be directed to all the Peripheral Units connected to the Concentrator, or only to one of them.

For messages relative to the sensors and actuators (basic services), the transmission can be generated:
- by the Peripheral Unit, for example, in the case of alarms coming from specific sensors (temperature, etc.) or
- by the PCT, that through the Concentrator, is able to operate on specific actuators (for example, shut-down of the gas valve).

In both cases it is desired that the message generator receives an answer in order to certifify the correct reception of such message.

### 3.3.2 - Multi-service-Concentrator Terminal

The transmission between the Multi-service Terminal and the Concentrator can take place with different procedures depending on the type of message exchanged (requests for intervention, alarms, tele-managed operations of user apparatuses).

In the case of request for interventions (urgent or programmed) or of alarms, the origin of the message is the user. Also in this case it is desired that there is an answer in the direction of the user, originated by the PCT, for confirming the correct reception of the information.

For messages relative to tele-managed apparatuses, the transmission can be generated:
- by the Multi-Service Terminal, for example, in the case of alarms coming from specific sensors (temperature, etc. ) or
- by the PCT, that through the Concentrator, is able to operate on specific actuators (for example, the closure of the gas valve).

In both cases it is desired that the message generator receives an answer in order to certifify the correct reception of such message.

### 4) FUNCTIONAL AND STRUCTURAL CHARACTERISTICS

The considerations made have demonstrated that the architecture of the telemetry system must take account of the basic services and of the teleservices; thus, the functions that the main parts of the system must carry out are examined and in particular:
- the Peripheral Unit
- the Concentrator
- the Multi-service Terminal
having previously shown in a summarised form the functions of the Central Telemetry Station, which is not treated here in a specific way.

### 4.1 - PERIPHERAL UNIT

### 4.1.1 - Functions

The Peripheral Unit is arranged within the meter and has the task to do the following main functions:
- acquire the reading, i.e. the information relative to the consumption (gas, water, etc.), by means of absolute "encoder" or incremental "encoder";
- memorise the reading, while waiting to send it to the Concentrator (and from this to the PCT) or for carrying out specific elaborations; the capacity of the memory should be sized depending of the type and of the number of functions provided;
- send the reading to a centralised apparatus or Concentrator, on request of the latter;
- give information to the user through a "display" relative to consumption, tariffs, etc.;
- receive information from specific sensors (for example, gas pressure, minimum and maximum flow rate, temperature, earthquake, etc.)
- operate actuators (for example, closure of the gas valve, etc.)

### 4.1.2 - Structure

The Peripheral Unit, having to be able to operate with all the possible structures of the telemetry system while maintaining a minimum cost, can be subdivided into modules, in order to execute the indispensable functions within the central module (constituted by the information processor and by the memory) and to allow the addition of other modules for further functions.

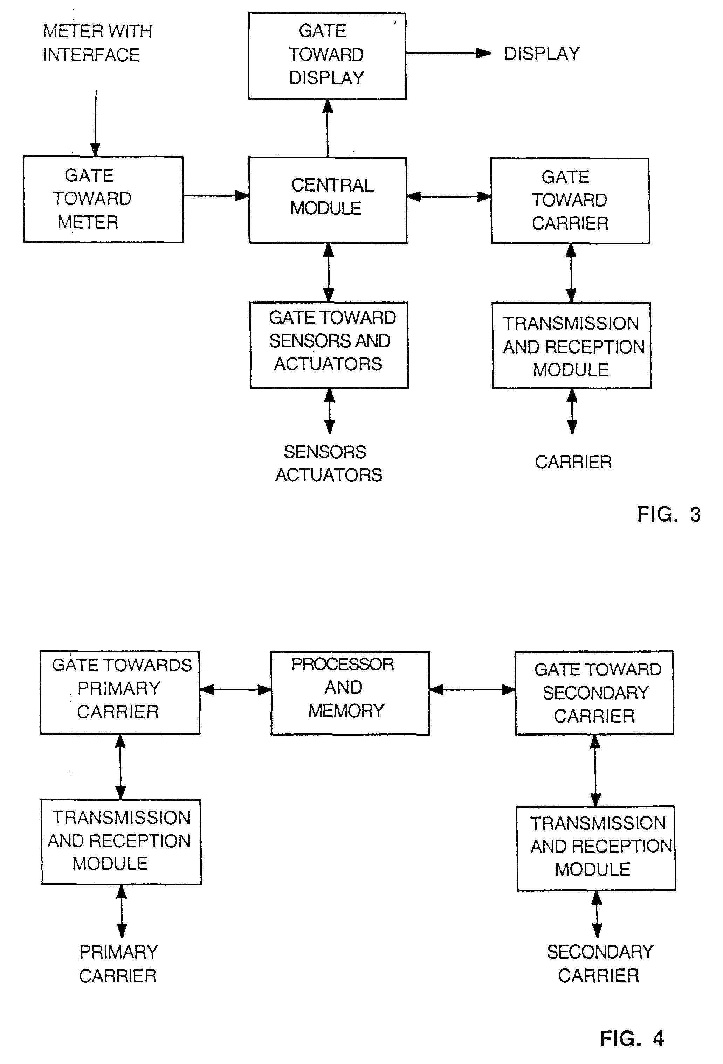

Fig. 3 illustrates the block diagram of the Peripheral Unit, where the modules around the central module, constituted by a processor and a memory are indicated.

Obviously, the complexity of the central module and of the peripheral ones must be optimised so as to make the entire system economically acceptable and easily manageable.

A display screen can be provided on the same meter, but in that case its reading can be difficult for the user (for example, in the case wherein the meter is arranged in battery (one after the other) or closed in an external cabinet). It is therefore desired to provide the possibility of arranging it in a favourable position for its reading by the user, installing a suitable connection by means of a cable, the cost of which should be carefully evaluated considering the installation problems.

### 4 .1.3 - Central module

The central module is made by a microprocessor system that makes the different functions according to established procedures. It is also equipped with a memory both for the data to be sent to the telemetry system, and for elaborating the acquired information. The main information acquired is:
- the reading of the meter, with associated identification of the meter, of the Service provider and supply type;
- data supplied by sensors of different values (as previously indicated);
- the commands and data coming from the PCT through the carrier, for acting on actuators or for displaying information;

The information delivered to the central module must be duly elaborated for:
- forming the message to transmit to the PCT,
- interpreting data retrieved by the sensors,
- acting on appropriate actuators (for example, the gas interception valve),
- displaying information (reading, tariffs, various messages, etc.) on a display.

The central module, together with the various gates in the direction of the meter, the carrier, the Multi-service Terminal, sensors and actuators, can be constituted by a "custom chip" containing the microprocessor, the ROM memories (Read Only Memory) and RAM (Random Access Memory) for the program and data, respectively.

The capacity of the RAM memory must be of at least 2 kbyte, so as to contain at least 100 readings, whereas the ROM memory can be of a lower capacity, depending of the complexity of the program to be executed.

It is very important that such module has built in C-MOS technology in order that consumption of the battery is reduced to the minimum.

### 4.1.4 - Interface with the meter

The interface with the meter must take into account that the measuring of the consumption, i.e. the information relative to the "reading" can be obtained with two different techniques:
- "the incremental encoder" (connected to the dial (or roller) relative to the digit of the unit (or submultiple) of the "meter"), that generates electric impulses, of low frequency;
- "the absolute encoder", that simultaneously "reads" the position of all the dials of the meter.

Each of the two systems has advantages and defects. Thus, the interface with the meter must:
- be versatile, i.e. be adaptable with both kinds of "encoder", absolute and incremental
- be installed directly within the meter, in the sealed section, in order that it cannot be tampered or altered
- contain data relative to the registration number of the meter and to the delivery type (gas, water, electric energy, heat)
- adaptable in the case of meters installed in battery (one after the other), i.e. consent to place in parallel the output data, utilising a connection similar to the RS 485 type, but with a much lower current consumption.

It is also opportune that such interface can be adapted to portable terminals, until the actual telemetry system is eventually installed.

### 4.1.5 - Interfaces with the carrier

The interface with the carrier is constituted by a transmission and reception module using a serial port both for the output information (transmission), or for the input information (reception), i.e. that come from or that is directed towards the central module.

The transmission and reception module is constituted by a transmitter and a radio receiver, i.e. a "transponder" or transceiver, the electrical characteristics of which are reported later in point 5.

### 4.1.6 - Interfaces for sensors and actuators

In the case wherein the Peripheral Unit also has to operate for executing operations relative to the basic services (note point 2.1), it is necessary that it be equipped with an additional module containing:
- a system for decoding messages transmitted by the "Central Telemetry Station" (PCT), to be sent to actuators by way of appropriate connections;
- one or more connections that accept incoming signals from sensors and a coder of the acquired information; such information can be of a numeric type or in binary form (for example, obtained by a switch opened or closed), but may also be of analog type (for example, a temperature) to be transformed in numerical form, through a A/D (Analog/Digital) converter.
- means for blocking the delivery of the supply (in particular of gas, water, electric energy, heat) after fraud, tampering, arrears, earthquake, fire or other calamities.

### 4.2 - CONCENTRATOR

### 4.2.1 - Functions

The Concentrator has the task of:
- collecting the information (readings, signals, alarms. etc.) sent by the Peripheral Unit and from the Multi-service Terminal;
- sending to the Peripheral Unit and also to the Multi-services Terminals the information or the commands transmitted by the PCT.

Therefore, the Concentrator has the function to both effectively concentrate the information sent by the Peripheral Units, and also to sort between such units the information coming from the PCT.

### 4.2.2 - Structure

To carry out the aforementioned functions, the structure of the Concentrator must be constituted by:
- a central module equipped with both intelligence (obtained by means of a duly programmed microprocessor), and with a memory sufficient for containing the information to be exchanged with the PCT and with the Peripheral Unit
- interfaces both with the primary carrier (in the direction of the Central Telemetry Station), and with the secondary carrier (in the direction of the Peripheral Units and the Multi-service Terminals).

Thus, the general block diagram of the concentrator is that as reported in Fig 4.

### 4.2.4 - Central module

The central module of the Concentrator is constituted by:
- a microprocessor, with a suitable management program of the communication system for collecting data coming from the Peripheral Units to be sent to the PCT and for sorting the data coming from the PCT in the direction of the Peripheral Units,
- a memory of adequate size (at least 64 kbyte), able to contain:
   - the information relative to 20 readings (128 bits each) or equivalent, coming from 200 Peripheral Units;
   - the information coming from the PCT, to be sorted among the various Peripheral Unit.

As it is considered appropriate that the information exchanges through the Concentrator are tagged with specific codes for every type of operation and with a progressive number (or, preferably, with the date and hour), the required size of the memory can be doubled if compared to the aforementioned minimum size, i.e. a memory capacity being equal to at least 128 kbyte is required.

### 4.2.5 - Interface with the primary carrier

The interface in the direction of the primary carrier (Argotel network) can be managed through an asynchronous serial communication port (for example of the type EIA RS 232 or CCITT V24/V28) or synchronous (EIA RS 422 or CCITT V24/V11), depending on the type of TOV (Terminal Over Voice) used.

The transmission speed of the information (bit-rate) on the primary carrier should be of 4800 bits/s.

The transmission and reception module is the "Over Voice" Terminal (TOV), because the primary carrier is the Argotel network.

The electrical characteristics and the conversation protocol are those provided for such type of apparatus and are not herein reported.

### 4.2.6 - Interface with the secondary carrier

The interface with the secondary carrier is also a serial port, the conversation protocol of which must be coherent with that of the Peripheral Unit (note par. 3.3.1) and of the Multi-service Terminal (note par. 3.3.2). The transmission and reception module is actually a transceiver, the main electrical characteristics of which are reported in paragraph 5.

### 4.3 - MULTI-SERVICE TERMINAL

The Multi-service Terminal is situated in the users premises and has the task of executing the functions shown in point 2.2. It is useful to subdivide such functions in at least two different groups, to manage with two different kinds of apparatus, one of a portable type (Portable Multi-service Terminal: TPP), the other of a fixed type ( Fixed Multi-service Terminal: TPF).

### 4.3.1 -Functions

The first type of Multi-service Terminal (TPP) must be able to carry out for example the following functions:
- Alarms for:
   - theft
   - fire
   - flooding
   - pensioner and/or handicapped aid
   - medical assistance
- Intervention request for:
   - urgent repairs of:
   - gas system (kitchen, heating, boiler, etc.)
   - hydraulic system
   - electric system
   - elevator system
   - antenna system
   - other
- Programmed maintenance of:
   - gas system (kitchen, heating, boiler, etc.)
   - hydraulic system
   - electric system
   - elevator system
   - antenna system
   - other

The second type of Multi-service Terminal (TPF) must be able to carry out the following functions:
- Security
   - Alarm and/or gas supply block for:
   - interior presence of CH4
   - presence of CO
   - fire
- Burglar alarm
- Fire fighting system management
- Energy management (heat, hot water) in centralised or autonomous systems.

### 4.3.2 - Structure

The aforementioned distinction between the two kinds of Multi-service Terminals, portable (TPP) and fixed (TPF) must be taken into consideration in defining the structure of the same terminal, mainly because the portable one requires the use of an autonomous supply (rechargeable batteries), while the fixed one provides the connection with the tele-managed apparatuses.

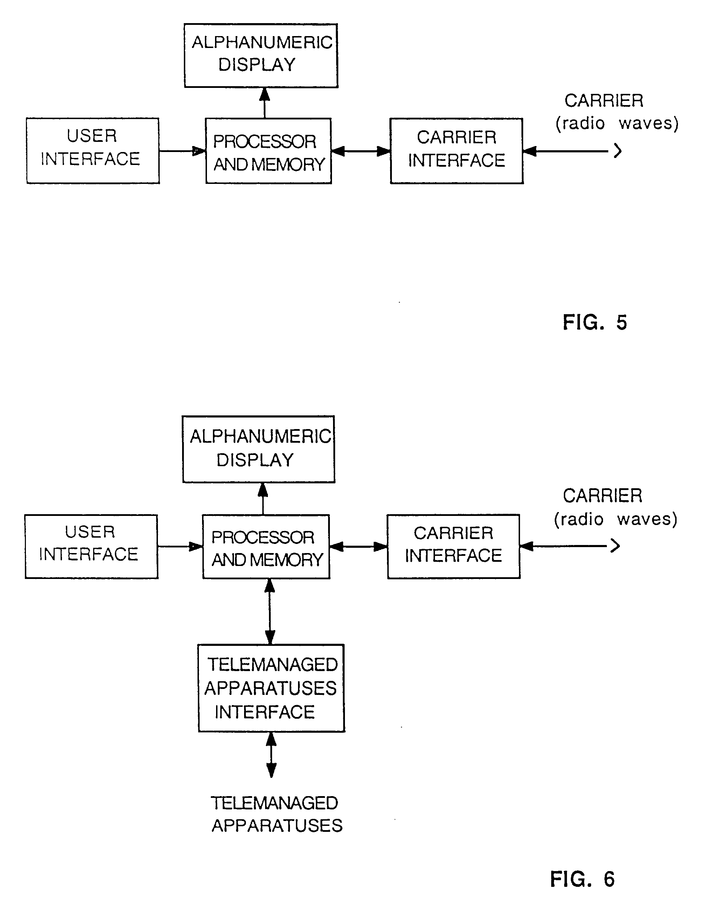

The block diagram of the Multi-service Terminal of the portable type (TPP) is represented in fig. 5, while the Multi-service Terminal of the fixed type (TPF) is represented in fig. 6.

It is opportune, for operative reasons, but also commercial, to maintain a distinction between the two kinds of terminals, even if they could be unified in the more complete structure of the terminal that is the TPF, above all for reducing costs.

It is noted that the two terminal types contain both a microprocessor with a memory, and an interface with the user (for example a keyboard), a display screen (alphanumeric display), and an interface with the secondary carrier.

The interface in the direction of the telemanaged apparatuses is typical of the Multi-service Terminals of a fixed type (TPF) and can be considered, from a practical viewpoint, an addition to be introduced in the structure of the Multi-service Terminal of a portable type (TPP).

Both can utilise the same microprocessor and the same memory, that constitutes the central module, and the same user interface (keyboard or push button panel) with the display screen or alphanumeric display. The interface in the direction of the tele-managed apparatuses constitutes an additional module to be introduced when such function is required (only TPF).

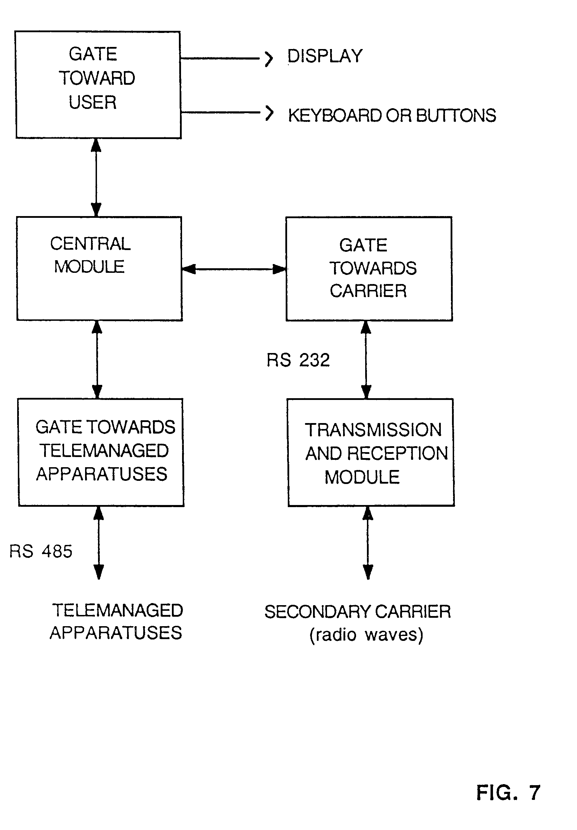

In fig. 7 the general block diagram of the Multi-service Terminal is represented, where the interface in the direction of the tele-managed apparatuses is present only if in the case concerning a Multi-service Terminal of the fixed type (TPF), while it is not present if it concerns a Multi-service Terminal of a portable type (TPP).

### 4.3.4 - Central module

The central module is constituted by a microprocessor system that manages the different functions according to established procedures. It is also equipped with a memory for the information to be sent to the PCT, or for acquiring the information coming from PCT.

The main information to be sent to the PCT is:
- requests of intervention (urgent or programmed), alarms, etc., through the keyboard or buttons (previouisly programmed for the different kinds of requests)
- data supplied by the sensors of different sizes of tele-managed apparatuses.

The information to be acquired, coming from the PCT is:
- answers to messages, urgent calls, alarms, to display on the screen (display)
- commands for acting on user apparatuses (for example, ignition or extinction of gas burner, in the case of tele-management of the heat) or on protection systems (for example shut-down of the gas valve, in the case of alarm, gas leaks, fire, etc.).

The incoming information to the central module by the user (requests of interventions, alarms, etc.) or by tele-managed user apparatuses, must be duly elaborated for:
- interpreting the requests of interventions or alarms originating from user and forming the message to transmit to the PCT,
- interpreting data retrieved by the sensors of the tele-managed apparatuses (for example: environment temperature)
- acting on opportune actuators (for example: closure of the gas valve)
- showing information (readings, tariffs, different messages, etc.) on a screen (display).

Messages to be exchanged between the Multi-service Terminal and the PCT can be of different types. Thus, it is necessary to distinguish between:
- messages relative to requests of intervention or alarms
- messages relative to tele-managed apparatuses.

The coding relative to such messages must be introduced by the central module according to interpretative codes prearranged within the PCT.

### 4.3.5 - Interface with the carrier

The connection between the Multi-service Terminal and the Concentrator is provided in a direct manner.

The interface with the carrier is constituted by a transmission and reception module driven through a serial port similar to RS 232, but with a lower current consumption, both for the output information (transmission), and for the input information (reception), i.e. that comes from or that is directed to the central module.

### 4.3.6 - Interface for tele-managed apparatuses

In the case wherein the Multi-service Terminal must also to operate for executing 'domotic' operations (tele-management of electric appliances) or energy tele-managed operations (heat, hot water), relative to user tele-managed apparatuses (note point 2.2), it is necessary that it be equipped with a suitable module containing a serial port of the type RS 485, having to interface itself with several apparatuses.

Externally to such module, before the effective connection with the tele-managed apparatuses an additional module may be provided that interfaces with the different kinds of tele-managed apparatuses and that contains:
- a decoding system of the messages transmitted by the "Central Telemetry Station" (PCT), to send to the tele-managed apparatuses, by means of suitable connections;
- one or more connections, that accept the signals coming from the tele-managed apparatuses and a coder of the acquired information; such information may be of numerical type (data string in binary form), but may also be of analog type (for example, a temperature) to be transformed in numerical form, by an A/D (Analog/Digital) converter.

Such additional module is not herein described, depending on the type of tele-managed apparatus.

### 4.3.7 - User Interfaces

The interface in the direction of the user is constituted by an alphanumeric keyboard or more simply by a series of buttons, each with a prearranged and encoded function. The presence of one or the other depends on the functions that the Multi-service Terminal has to carry out, but mainly on the complexity of the functions that are offered to the user. In fact, through a keyboard it is possible to manage a complete interactive conversation between the user and the PCT, while through the button panel the exchange of messages should be much more limited and simple.

The user also has a display screen available, that allows to make clear both the message sent, and the eventual answer coming from the PCT, in order to certify intervention request or alarm taken place.

The size of the screen (number of characters displayed) will depend on the decisions to be made in final design release of the Multi-service Terminal, also based on the functions that are intended to be carried out.

### 5) ELECTRICAL CHARACTERISTICS

The principal electrical characteristics of an apparatus utilised for the telemetry are herein reported and mainly those regarding:
- the connection via radio of the Concentrator with the Peripheral Unit, or with the Multi-service Terminal;
- consumption of the battery relative to the Peripheral Unit, to the Concentrator and to the Multi-service Terminal.

### 5.1 - Characteristics of the connection via radio

As stated the connection via radio must:
- be of a bi-directional type in order to allow, besides the reading of the meter (for which a single direction connection would be sufficient), also other basic services and teleservices,
- allow operative modes of the simplex and duplex type,
- avoid problems due to multipath propagation, using spread spectrum transmission techniques,
the band occupation of the connection can not be contained within a single telephone channel (for example of 25 kHz), but requires an extended band of at least 2-3 MHz, with spread spectrum transmission techniques such as DS (Direct Sequence) or FH (Frequency Hopping).

The first transmission technique (DS) reduces the spectral density of the transmitted signal, thus reducing the interference on the single telephone channel (of 25 kHz), eventually interfered.

The second transmission technique (FH) occupies sequentially and for very short times channels of 25 kHz, obtaining, also in this case a reduction of the disturbance on the single telephone channel.

If the connection is of simplex type, it is sufficient to allocate only one band of 2-3 MHz, while for duplex connections it is necessary to allocate two bands of 2-3 MHz each, having a distance at least 10-20% of the central frequency of the band.

The type of modulation used may be that of amplitude, or that of frequency, or that of phase.

Taking into account that the electrical characteristics of transceiver apparatuses within the meter (Peripheral Unit) depend on the cost constrains and on the consumption of the battery, besides miniaturising, it is clear in such case that small transmission powers must be employed (e.g. 1 mW), while the obtainable sensitivity of the receiver is low (for example, -60 dB(mW):=220 mV).

The characteristics of the transceiver used within the Multi-service Terminal have similar requirements, even if not in such a restrictive way, being able to provide the re-charging of the batteries.

On the other hand, for the transceiver within the Concentrator it is possible to use higher transmission powers (for example, 10-20W) and obtain a higher receiver sensitivity (for example, -110 dB(mW):~0.7 mV).

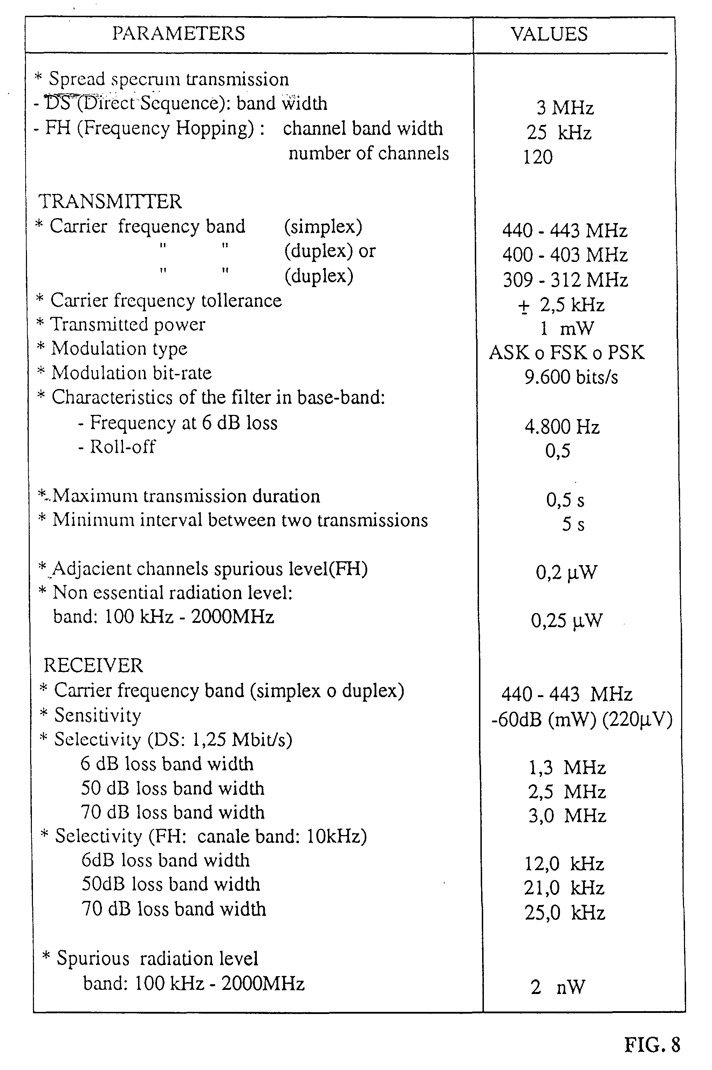

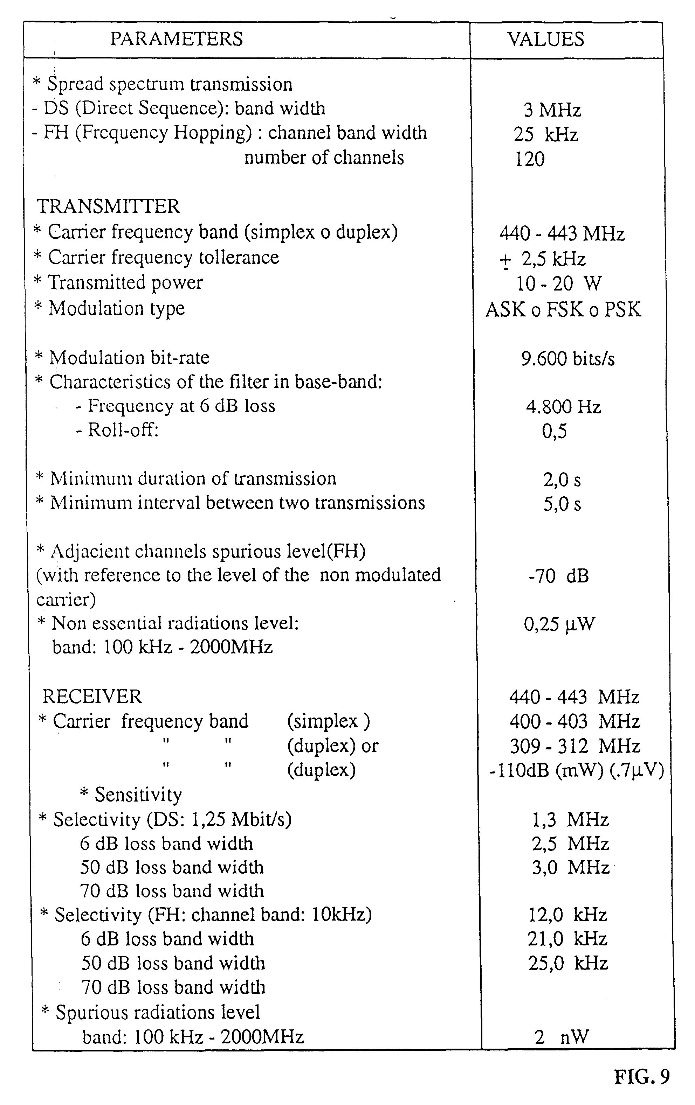

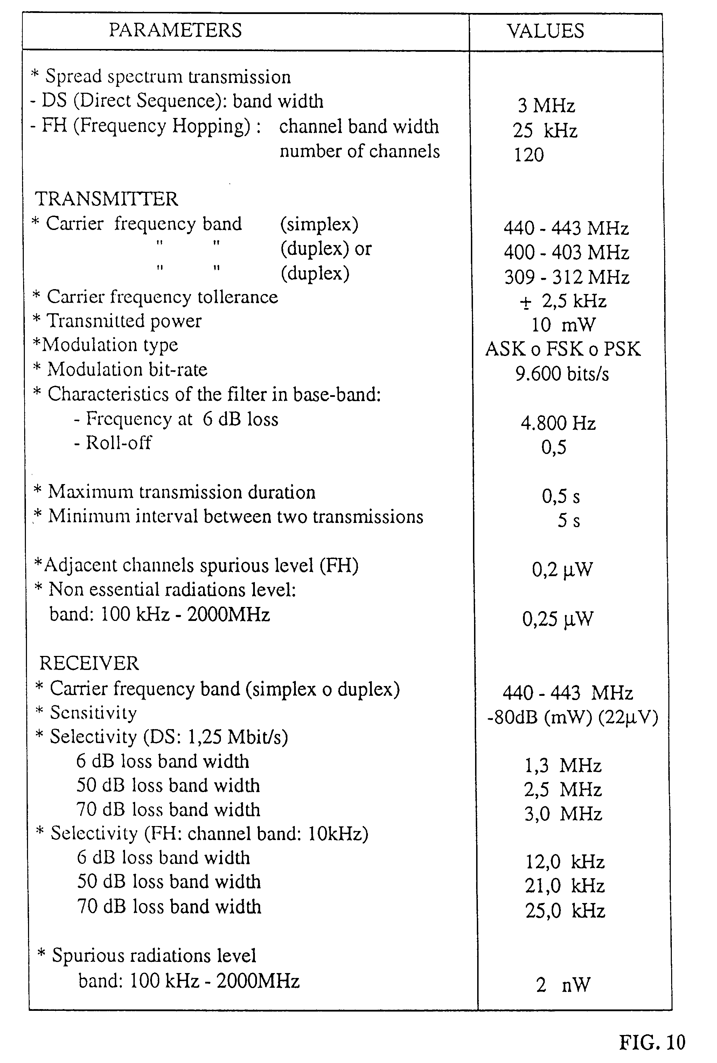

In the tables of the figures 8, 9 and 10 the main values of such characteristics have been reported, in order to be used by the designer; the data reported in the tables is provisional data and it will be possible to carry out modifications concerning the structure of the transceiver apparatus, or concerning the spread spectrum transmission system.

### 5.2 - Consumption

### 5.2.1 - Peripheral Unit

As the secondary carrier is constituted by radio waves, the Peripheral Unit must be equipped with autonomous supply, by way of batteries; thus, the consumption of electronic devices contained within it must be minimised in order to allow a life of at least 7-8 years.

For reducing consumption the following techniques are generally employed:
- maintaining the transmission system off and that of reception in a condition of minimum consumption
- periodically activating the receiving system only for a short time, for example for 0,1 s every 2 s, i.e. for a twentieth of the time.

Such solution does not reduce the answering readiness of the system, which however remains ensured, as the maximum waiting time is of 2 s.

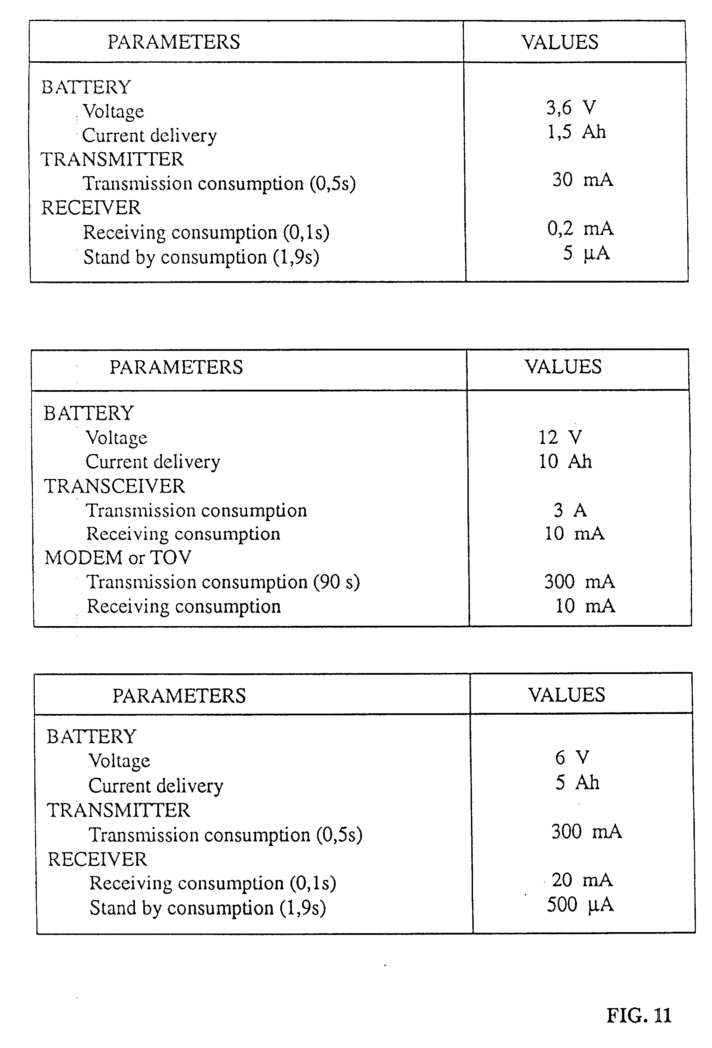

An example of the battery consumption for obtaining the requested autonomy is reported in the first table of the fig. 11. Based on such values it is possible to estimate the battery life, supposing that this can supply 1,5 Ah.

If the battery energy can be exploited for the 70% of its nominal value, its duration may reach 8 years.

### 5.2.2 - Concentrator

The supply of the Concentrator is provided through the electricity network, with a buffer battery, able to ensure the functioning of the system, in absence of the mains, for a time in the order of 10-12 days, so as to be able to:
- forward important signals (for example, temperature, fire alarms, etc.) of the tele-managed system and urgent calls coming from the Multi-service Terminal
- execute urgent interventions (for example, supply the gas closure valve, activate actuators of the tele-managed system, etc.).

In the second table of the fig. 11 the most important values are reported relative to the consumption of the transceiver, and of the modem or TOV.

Taking into account such values and supposing that:
- the telemetry of all the meters is not carried out due to lack of electric energy in a certain geographic area, while the lack of the mains is promptly signalled to the PCT,
- the requests of tele-management and teleservices can be fulfilled only a number of times (at least 10) during such interventions, the duration of the transmission via radio being 2 s of time, while that by the "modem" can last up to 90 s,
- the receiver is always active, as also is the "modem" or TOV connected to the primary carrier,
it is deduced that the duration of the battery can last up to 12 days.

### 5.2.3 - Multi-service Terminal

Supply is provided through a rechargeable battery for both types of Multi-service Terminals (portable: TPP or fixed: TPF); the recharging must take place (through a suitable apparatus connected to the electric network) by the user. The duration of the battery of the TPP in absence of network voltage must be of at least 2-3 months.

Also for the Multi-service Terminal it is useful to reduce the consumption of the battery by adopting the technique of:
- maintaining the transmission system off and that of reception in a condition of minimum consumption
- periodically activating the receiving system only for a short time, for example 0,1 s every 2 s, i.e. for a twentieth of the time.

Such solution does not reduce the answering readiness of the system, which however remains ensured, as the maximum wait is of 2 s.

An example of the battery consumption for the Multi-service Terminal is reported in the third table of the fig. 11.

In such case it is deduced that the duration of the battery is of approximately 2-3 months.

### 6) DIMENSIONAL SPECIFICATIONS

As an explanatory example the overall dimensions of the single units are herein reported.

The sizes are in millimetres (mm) and relates to:
Length (l), depth (p), height (h).

### 6.1 -Peripheral Unit

Overall dimensions of the Peripheral Unit:
l = 130 mm, p = 90 mm, h = 90 mm.

### 6.2 - Concentrator

Overall dimensions of the concentrator:
l = 250 mm, p = 150 mm, h = 150 mm.

### 6.3 - Multi-service Terminal

Overall dimensions of the Multi-service Terminal of the portable type (TPP):
l = 200 mm, p = 100 mm, h = 100 mm

Overall dimensions of the Multi-service Terminal of fixed type (TPF):
l = 400 mm, p = 200 mm, h = 200 mm.

The characteristics of the method of telemetry described result in being clear from description of the supplied example.

From the above description the advantages of the method subject of the present invention are also clear.

In particular they consist in that the necessity of vehicles equipped with transceivers is eliminated as the medium between the central station and peripheral stations, and that a permanent connection between said central station and its peripherals can be assured.

It is clear that the described method is more effective and allows to carry out further functions if compared of those known; as is also clear that numerous variations are possible by the skilled-man, to the method described by way of example, without departing from the novelty principles inherent in the invention.

It is clear that all the numerical indications supplied (relative to frequencies, sizes, band lengths, transmission speed, etc..) are purely exemplificative and non limiting.

An interesting variation may be in that the Multi-service Terminals are not directly connected with the Intermediate Stations (concentrators), but are instead connected to the Peripheral Stations, which, in turn, are connected with the Intermediate Stations.

## Claims

1. Method of data transmission for telemetry purposes, applicable to distribution systems, in particular of gas, water, electric energy, heat, that provides a central station and a plurality of peripheral stations connected with said central station, wherein a plurality of intermediate fixed stations, are provided, each ones connected in a permanent manner with the central station and, via radio, with a plurality of peripheral stations comprising a battery power supply periodically activated, **characterized by** the fact that the intermediate fixed stations call individually each peripheral station in order to receive by them telemetry data relating to the peripheral stations and that the duration of the call from the intermediate fixed stations to each peripheral station is longer than the period in which said battery power supply is not activated.

2. Method of data transmission for telemetry purposes, according to claim 1, **characterised in that** it is provided that said peripheral stations include data reading units, associated with meters.

3. Method of data transmission for telemetry purposes, according to claim 1, **characterised in that** it is provided that said peripheral stations include multi-service terminals, that execute additional services.

4. Method of data transmission for telemetry purposes, according to claim 2, **characterised in that** it is provided that said data reading units include at least one central module and a port connected to a meter.

5. Method of data transmission for telemetry purposes, according to claim 2, **characterised in that** it is provided that said data reading units include a central module, interfacing units with sensor elements, interfacing units with actuator elements and a transmission and reception module for the connection with a fixed intermediate station.

6. Method of data transmission for telemetry purposes, according to claim 2, **characterised in that** it is provided that said data reading units include a display.

7. Method of data transmission for telemetry purposes, according to claim 2, **characterised in that** it is provided that said data reading units include means for blocking the delivery of the supply, in particular of gas, water, electric energy, heat, in following cases of fraud, tampering, arrears, earthquakes, fire or other calamities.

8. Method of data transmission for telemetry purposes, according to claim 3, **characterised in that** it is provided that said multi-service terminals include a processor, a memory, a user interface and a transmission and reception module for connection with a fixed intermediate station.

9. Method of data transmission for telemetry purposes, according to claims 4 or 5, **characterised in that** it is provided that said central module comprises a microprocessor.

10. Method of data transmission for telemetry purposes, according to claims 4 or 5, **characterised in that** it is provided that said central module comprises a memory able to contain the information relative to one or more meter readings and/or data retrieved by sensors and/or commands coming from the central station through the fixed intermediate station.

11. Method of data transmission for telemetry purposes, according to claim 8, **characterised in that** it is provided that said multi-service terminals are able to execute an alarm function, in particular for theft, fire, flood, pensioner aid, handicapped aid, medical assistance, and/or an intervention request for urgent maintenance or repairs to domestic systems, in particular gas, plumbing, electric, elevator.

12. Method of data transmission for telemetry purposes, according to claim 8, **characterised in that** it is provided that said multi-service terminals are able to execute a security function, in particular delivery block of the gas supply, fire systems management, burglar alarm.

13. Method of data transmission for telemetry purposes, according to claim 8, **characterised in that** said multi-service terminals are able to execute energy management functions, in particular heat, hot water, and domotics, i.e. tele-managed electric appliance.

14. Method of data transmission for telemetry purposes, according to claim 1, **characterised in that** it is provided that said fixed intermediate stations include a processor, a memory, a first transmission and reception module for the connection with the central station and a second transmission and reception module for the connection with the peripheral stations.

15. Method of data transmission for telemetry purposes, according to claim 14, **characterised in that** it is provided that said first transmission and reception module comprises an asynchronous or synchronous serial port for the connection with the telematic network.

16. Method of data transmission for telemetry purposes, according to claim 14, **characterised in that** it is provided that said second transmission and reception module comprises a transceiver via radio with amplitude or frequency or phase modulation and in particular of the spread spectrum type.

17. Method of data transmission for telemetry purposes, according to claim 8, **characterised in that** it is provided that said user interface comprises an alphanumeric display and/or a keyboard.

18. Method of data transmission for telemetry purposes, according to claim 8, **characterised in that** it is provided that said multi-service terminals are directly linked, e.g. via radio, with said fixed intermediate station.

19. Method of data transmission for telemetry purposes, according to claim 3, **characterised in that** it is provided that said multi-service terminals are indirectly linked with said fixed intermediate stations, through the peripheral stations.

20. Method of data transmission for telemetry purposes, according to claim 14, **characterised in that** it is provided that said first transmission and reception module comprises means for connection with the Central Station through switched telephone network.

21. Method of data transmission for telemetry purposes, according to claim 14, **characterised in that** it is provided that said first transmission and reception module comprises means for connection with the Central Station through dedicated line.

22. Method of data transmission for telemetry purposes, according to claim 14, **characterised in that** it is provided that said first transmission and reception module comprises means for connection with the Central Station through optical fibres.

23. Method of data transmission for telemetry purposes, according to claim 14, **characterised in that** it is provided that said first transmission and reception module comprises means for connection with the Central Station through radio waves.

24. Method of data transmission for telemetry purposes, according to claim 14, **characterised in that** it is provided that said first transmission and reception module comprises means for connection with the Central Station through electric lines of low or medium voltage.

25. Method of data transmission for telemetry purposes, according to claim 14, **characterised in that** it is provided that said first transmission and reception module comprises means for connection with the Central Station through cellular telephone.

26. Method of data transmission for telemetry purposes, according to claim 14, **characterised in that** it is provided that said first transmission and reception module comprises means for the connection with the Central Station through a bidirectional CATV system.

27. Method of data transmission for telemetry purposes, according to claim 2, **characterised in that** said peripheral stations are able to carry out the measure or calculation of the flow rate of the supply, in particular gas, water, electric energy, heat.

28. Method of data transmission for telemetry purposes, according to claim 1, **characterised in that** said peripheral stations include blocking means of the delivery of the supply, in particular of gas, water, electric energy, heat, controlled by the central station or by detectors of anomalous conditions near the peripheral stations.

29. Apparatus of data transmission for telemetry purposes utilising the method according to one or more of the previous claims.

## Patentansprüche

1. Datenübertragungsverfahren für Telemetriezwecke, welches bei Verteilsystemen, insbesondere für Gas, Wasser, elektrische Energie, Wärme einsetzbar ist, die eine Zentralstation und mehrere Peripheriestationen bereitstellen, die mit der Zentralstation verbunden sind, wobei mehrere ortsfeste Zwischenstationen vorgesehen sind, von denen jede permanent mit der Zentralstation und über Funkübertragung mit einer Vielzahl von Peripheriestationen verbunden ist, enthaltend eine Batterieenergieversorgung, die periodisch aktiviert, **gekennzeichnet durch** die Tatsache, dass die ortsfesten Zwischenstationen jede der Peripheriestationen einzeln rufen können, um von ihr Telemetriedaten betreffend die Peripheriestationen zu empfangen und dass die Dauer des Rufes von den ortsfesten Zwischenstationen zu jeder Peripheriestation länger ist als die Periode, in der die Batterieenergieversorgung nicht aktiviert ist.

2. Datenübertragungsverfahren für Telemetriezwecke nach Anspruch 1,
**dadurch gekennzeichnet, dass** vorgesehen ist, dass die Peripheriestationen Datenleseeinheiten enthalten, zu denen Messeinrichtungen gehören.

3. Datenübertragungsverfahren für Telemetriezwecke nach Anspruch 1,
**dadurch gekennzeichnet, dass** vorgesehen ist, dass die Peripheriestationen Mehrdienst-Endgeräte enthalten, die zusätzliche Dienste ausführen.

4. Datenübertragungsverfahren für Telemetriezwecke nach Anspruch 2,
**dadurch gekennzeichnet, dass** vorgesehen ist, dass die Datenleseeinheiten zumindest ein zentrales Modul und einen Anschluss enthalten, der mit einer Messeinrichtung verbunden ist.

5. Datenübertragungsverfahren für Telemetriezwecke nach Anspruch 2,
**dadurch gekennzeichnet, dass** vorgesehen ist, dass die Datenleseeinheiten ein Zentralmodul, Schnittstelleneinheiten mit Sensorelementen, Schnittstelleneinheiten mit Betätigungselementen sowie ein Übertragungs- und Empfangsmodul für die Verbindung mit einer ortsfesten Zwischenstation enthalten.

6. Datenübertragungsverfahren für Telemetriezwecke nach Anspruch 2,
**dadurch gekennzeichnet, dass** vorgesehen ist, dass die Datenleseeinheiten eine Anzeigeeinrichtung enthalten.

7. Datenübertragungsverfahren für Telemetriezwecke nach Anspruch 2,
**dadurch gekennzeichnet, dass** vorgesehen ist, dass die Datenleseeinheiten Mittel zum Sperren der Versorgungsbereitstellung, insbesondere von Gas, Wasser, elektrischer Energie, Wärme im Falle von Betrug, Manipulationen, Zahlungsrückständen, Erdbeben, Feuer oder anderen Katastrophen enthalten.

8. Datenübertragungsverfahren für Telemetriezwecke nach Anspruch 3,
**dadurch gekennzeichnet, dass** vorgesehen ist, dass die Mehrdienst-Endgeräte einen Prozessor, einen Speicher, eine Benutzerschnittstelle sowie ein Übertragungs- und Empfangsmodul für die Verbindung mit einer ortsfesten Zwischenstation enthalten.

9. Datenübertragungsverfahren für Telemetriezwecke nach Anspruch 4 oder 5,
**dadurch gekennzeichnet, dass** vorgesehen ist, dass das Zentralmodul einen Mikroprozessor enthält.

10. Datenübertragungsverfahren für Telemetriezwecke nach Anspruch 4 oder 5,
**dadurch gekennzeichnet, dass** vorgesehen ist, dass das Zentralmodul einen Speicher enthält, der in der Lage ist, Informationen betreffend eine oder mehrere Messablesungen und/oder Daten, die durch Sensoren gewonnen werden, und/oder Befehle, welche von der Zentralstation über die ortsfesten Zwischenstationen kommen, aufzunehmen.

11. Datenübertragungsverfahren für Telemetriezwecke nach Anspruch 8,
**dadurch gekennzeichnet, dass** vorgesehen ist, dass die Mehrdienst-Endgeräte in der Lage sind Alarm auszulösen, insbesondere bei Diebstahl, Feuer, Überschwemmung, zu Hilfeleisung an alte und behinderte Personen, ärztlicher Versorgung und/oder zur Eingriffsanforderung bei dringendem Wartungs- oder Reparaturbedarf an Haushaltssystemen, insbesondere für Gas, Sanitäranlagen, elektrische Versorgung, Fahrstuhl.

12. Datenübertragungsverfahren für Telemetriezwecke nach Anspruch 8,
**dadurch gekennzeichnet, dass** vorgesehen ist, dass die Mehrdienst-Endgeräte in der Lage sind, eine Sicherheitsfunktion, insbesondere eine Gaszufuhrsperre, den Einsatz der Brandschutzeinrichtungen und einen Einbruchsalarm auszuführen.

13. Datenübertragungsverfahren für Telemetriezwecke nach Anspruch 8,
**dadurch gekennzeichnet, dass** die Mehrdienst-Endgeräte in der Lage sind, E-nergiesteuerungsfunktionen, insbesondere hinsichtlich Wärme, heißem Wasser und Domotics d. h. femgesteuerten elektrischen Geräten auszuführen.

14. Datenübertragungsverfahren für Telemetriezwecke nach Anspruch 1,
**dadurch gekennzeichnet, dass** vorgesehen ist, dass die ortsfesten Zwischenstationen einen Prozessor, einen Speicher, ein erstes Übertragungs- und Empfangsmodul für die Verbindung mit der Zentralstation sowie ein zweites Übertragungs- und Empfangsmodul für die Verbindung mit den Peripheriestationen enthalten.

15. Datenübertragungsverfahren für Telemetriezwecke nach Anspruch 14,
**dadurch gekennzeichnet, dass** vorgesehen ist, dass das erste Übertragungsund Empfangsmodul einen asynchronen oder synchronen seriellen Anschluss für die Verbindung mit dem Teiematiknetzwerk enthält.

16. Datenübertragungsverfahren für Telemetriezwecke nach Anspruch 14,
**dadurch gekennzeichnet, dass** vorgesehen ist, dass das zweite Übertragungsund Empfangsmodul einen Funk-Sender/Empfänger mit Amplitudenoder Frequenz- oder Phasenmodulation und insbesondere zur Streuspektrumübertragung enthält.

17. Datenübertragungsverfahren für Telemetriezwecke nach Anspruch 8,
**dadurch gekennzeichnet, dass** vorgesehen ist, dass die Benutzerschnittstelle eine alphanumerische Anzeige und/oder eine Tastatur enthält.

18. Datenübertragungsverfahren für Telemetriezwecke nach Anspruch 8,
**dadurch gekennzeichnet, dass** vorgesehen ist, dass die Mehrdienst-Endgeräte unmittelbar, beispielsweise über Funk, mit der ortsfesten Zwischenstation verbunden sind.

19. Datenübertragungsverfahren für Telemetriezwecke nach Anspruch 3,
**dadurch gekennzeichnet, dass** vorgesehen ist, dass die Mehrdienst-Endgeräte über die Peripheriestationen indirekt mit den ortsfesten Zwischenstationen verbunden sind.

20. Datenübertragungsverfahren für Telemetriezwecke nach Anspruch 14,
**dadurch gekennzeichnet, dass** vorgesehen ist, dass das erste Übertragungsund Empfangsmodul Mittel für die Verbindung mit der Zentralstation über ein Telefonfestnetz enthalten.

21. Datenübertragungsverfahren für Telemetriezwecke nach Anspruch 14,
**dadurch gekennzeichnet, dass** vorgesehen ist, dass das erste Übertragungsund Empfangsmodul Mittel für die Verbindung mit der Zentralstation über eine Standleitung enthält.

22. Datenübertragungsverfahren für Telemetriezwecke nach Anspruch 14,
**dadurch gekennzeichnet, dass** vorgesehen ist, dass das erste Übertragungsund Empfangsmodul Mittel für die Verbindung mit der Zentralstation über Glasfaserkabel enthält.

23. Datenübertragungsverfahren für Telemetriezwecke nach Anspruch 14,
**dadurch gekennzeichnet, dass** vorgesehen ist, dass das erste Übertragungsund Empfangsmodul Mittel für die Verbindung mit der Zentralstation über Funk enthält.

24. Datenübertragungsverfahren für Telemetriezwecke nach Anspruch 14,
**dadurch gekennzeichnet, dass** vorgesehen ist, dass das erste Übertragungsund Empfangsmodul Mittel für die Verbindung mit der Zentralstation über elektrische Leitungen des Niederspannungs- oder Mittelspannungsbereiches enthält.

25. Datenübertragungsverfahren für Telemetriezwecke nach Anspruch 14,
**dadurch gekennzeichnet, dass** vorgesehen ist, dass das erste Übertragungsund Empfangsmodul Mittel für die Verbindung mit der Zentralstation über ein Mobiltelefon enthält.

26. Datenübertragungsverfahren für Telemetriezwecke nach Anspruch 14,
**dadurch gekennzeichnet, dass** vorgesehen ist, dass das erste Übertragungsund Empfangsmodul Mittel für die Verbindung mit der Zentralstation über ein bidirektionales CATV-System enthält.

27. Datenübertragungsverfahren für Telemetriezwecke nach Anspruch 2,
**dadurch gekennzeichnet, dass** die Peripheriestationen in der Lage sind, die Messung oder Berechnung der Durchflussmenge des Versorgungsmediums, insbesondere von Gas, Wasser, elektrischer Energie, Wärme auszuführen.

28. Datenübertragungsverfahren für Telemetriezwecke nach Anspruch 1,
**dadurch gekennzeichnet, dass** die Peripheriestationen Sperrmittel für die Versorgungsunterbrechung insbesondere von Gas, Wasser, elektrischer Energie, Wärme enthalten, die durch die Zentralstation oder durch Detektoren für anomale Bedingungen bei den Peripheriestationen gesteuert werden.

29. Datenübertragungseinrichtung für Telemetriezwecke, welche das Verfahren gemäß einem oder mehreren der vorstehenden Ansprüche verwendet.

## Revendications

1. Méthode de transmission de données à des fins de télémétrie, applicable à des systèmes de distribution, en particulier de gaz, d'eau, d'énergie électrique ou d'énergie calorifique, alimentant une station centrale et une pluralité de stations périphériques raccordées à ladite station centrale, une pluralité de stations intermédiaires fixes étant prévues, chacune desdites stations intermédiaires étant liée en permanence à la station centrale et, par ondes hertziennes, à une pluralité de stations périphériques comprenant un bloc d'alimentation pour batteries activé périodiquement, **caractérisé en ce que** les stations intermédiaires fixes appellent individuellement chaque station périphérique afin de recevoir de ces dernières des données télémétriques concemant lesdites stations périphériques, et **en ce que** la durée de l'appel d'une station intermédiaire fixe à chaque station périphérique est plus longue que la période durant laquelle ledit bloc d'alimentation pour batteries n'est pas activé.

2. Méthode de transmission de données à des fins de télémétrie selon la revendication 1, **caractérisée en ce qu'**il est prévu que lesdites stations périphériques comprennent des unités de lecture de données associées à des compteurs.

3. Méthode de transmission de données à des fins de télémétrie selon la revendication 1, **caractérisée en ce qu'**il est prévu que lesdites stations périphériques comprennent des terminaux à services multiples exécutant des services supplémentaires.

4. Méthode de transmission de données à des fins de télémétrie selon la revendication 2, **caractérisée en ce qu'**il est prévu que lesdites unités de lecture de données comprennent au moins un module central et une entrée raccordée à un compteur.

5. Méthode de transmission de données à des fins de télémétrie selon la revendication 2, **caractérisée en ce qu'**il est prévu que lesdites unités de lecture de données comprennent un module central, des unités d'interface pourvues d'éléments sensibles, des unités d'interface pourvues d'éléments actionneurs ainsi qu'un module de transmission et de réception assurant la liaison avec une station intermédiaire fixe.

6. Méthode de transmission de données à des fins de télémétrie selon la revendication 2, **caractérisée en ce qu'**il est prévu que lesdites unités de lecture de données comprennent une unité d'affichage.

7. Méthode de transmission de données à des fins de télémétrie selon la revendication 2, **caractérisée en ce qu'**il est prévu que lesdites unités de lecture de données comprennent des moyens permettant de bloquer la distribution de médias, en particulier de gaz, d'eau, d'énergie électrique ou d'énergie calorifique, en cas de fraude, de manipulation, d'arriérés de payement, de tremblement de terre, d'incendie ou d'autres événements catastrophiques.

8. Méthode de transmission de données à des fins de télémétrie selon la revendication 3, **caractérisée en ce qu'**il est prévu que lesdits terminaux à services multiples comprennent un processeur, une mémoire, une interface utilisateur, ainsi qu'un module de transmission et de réception assurant la liaison avec une station intermédiaire fixe.

9. Méthode de transmission de données à des fins de télémétrie selon l'une des revendications 4 ou 5, **caractérisée en ce qu'**il est prévu que ledit module central comprend un microprocesseur.

10. Méthode de transmission de données à des fins de télémétrie selon l'une des revendications 4 ou 5, **caractérisée en ce qu'**il est prévu que ledit module central comprend une mémoire pouvant contenir l'information relative à une ou plusieurs lectures de compteur et/ou des données obtenues au moyen de capteurs et/ou des commandes provenant de la station centrale au travers de la station intermédiaire fixe.

11. Méthode de transmission de données à des fins de télémétrie selon la revendication 8, **caractérisée en ce qu'**il est prévu que lesdits terminaux à services multiples sont capables d'exécuter une fonction d'alarme, relative en particulier au vol, au feu, à l'inondation, à l'aide aux retraités, à l'aide aux handicapés, à l'assistance médicale et/ou à une demande d'intervention d'urgence pour l'entretien ou la réparation de systèmes domestiques, concernant en particulier les réseaux du gaz, de plomberie, électrique, ou encore les ascenseurs.

12. Méthode de transmission de données à des fins de télémétrie selon la revendication 8, **caractérisée en ce qu'**il est prévu que lesdits terminaux à services multiples sont capables d'exécuter une fonction de sécurité, en particulier le blocage de la fourniture de gaz, la coordination de systèmes de protection contre l'incendie, l'avertissement d'effraction.

13. Méthode de transmission de données à des fins de télémétrie selon la revendication 8, **caractérisée en ce qu'**il est prévu que lesdits terminaux à services multiples sont capables d'exécuter des fonctions de gestion de l'énergie, en particulier de la chaleur, de l'eau chaude et d'applications ménagères, par exemple des appareils électroménagers télécommandés.

14. Méthode de transmission de données à des fins de télémétrie selon la revendication 1, **caractérisée en ce qu'**il est prévu que lesdites stations intermédiaires comprennent un processeur, une mémoire, un premier module de transmission et de réception assurant la liaison à la station centrale, et un second module de transmission et de réception assurant la liaison aux stations périphériques.

15. Méthode de transmission de données à des fins de télémétrie selon la revendication 14, **caractérisée en ce qu'**il est prévu que ledit premier module de transmission et de réception comprend une première entrée sérielle asynchrone ou synchrone assurant la liaison au réseau télématique.

16. Méthode de transmission de données à des fins de télémétrie selon la revendication 14, **caractérisée en ce qu'**il est prévu que ledit second module de transmission et de réception comprend un émetteur-récepteur radio à modulation d'amplitude, de fréquence ou de phase, et en particulier du type à spectre étalé.

17. Méthode de transmission de données à des fins de télémétrie selon la revendication 8, **caractérisée en ce qu'**il est prévu que ladite interface utilisateur comprend un affichage alphanumérique et/ou un clavier.

18. Méthode de transmission de données à des fins de télémétrie selon la revendication 8, **caractérisée en ce qu'**il est prévu que lesdits terminaux à services multiples sont directement liés aux dites stations intermédiaires fixes, par exemple par ondes hertziennes.

19. Méthode de transmission de données à des fins de télémétrie selon la revendication 3, **caractérisée en ce qu'**il est prévu que lesdits terminaux à services multiples sont indirectement liés aux dites stations intermédiaires fixes par l'intermédiaire des stations périphériques.

20. Méthode de transmission de données à des fins de télémétrie selon la revendication 14, **caractérisée en ce qu'**il est prévu que ledit premier module de transmission et de réception comprend des moyens de liaison à la station centrale par l'intermédiaire d'un réseau téléphonique commuté.

21. Méthode de transmission de données à des fins de télémétrie selon la revendication 14, **caractérisée en ce qu'**il est prévu que ledit premier module de transmission et de réception comprend des moyens de liaison à la station centrale au travers d'une ligne spécialisée.

22. Méthode de transmission de données à des fins de télémétrie selon la revendication 14, **caractérisée en ce qu'**il est prévu que ledit premier module de transmission et de réception comprend des moyens de liaison à la station centrale au travers de fibres optiques.

23. Méthode de transmission de données à des fins de télémétrie selon la revendication 14, **caractérisée en ce qu'**il est prévu que ledit premier module de transmission et de réception comprend des moyens de liaison à la station centrale par l'intermédiaire d'ondes hertziennes.

24. Méthode de transmission de données à des fins de télémétrie selon la revendication 14, **caractérisée en ce qu'**il est prévu que ledit premier module de transmission et de réception comprend des moyens de liaison à la station centrale au travers de lignes électriques de basse ou moyenne tension.

25. Méthode de transmission de données à des fins de télémétrie selon la revendication 14, **caractérisée en ce qu'**il est prévu que ledit premier module de transmission et de réception comprend des moyens de liaison à la station centrale par téléphonie cellulaire.

26. Méthode de transmission de données à des fins de télémétrie selon la revendication 14, **caractérisée en ce qu'**il est prévu que ledit premier module de transmission et de réception comprend des moyens de liaison à la station centrale par l'intermédiaire d'un système de télévision par câble bidirectionnel.

27. Méthode de transmission de données à des fins de télémétrie selon la revendication 2, **caractérisée en ce que** lesdites stations périphériques sont capables de mesurer ou de calculer le débit de foumiture, en particulier de gaz, d'eau, d'énergie électrique ou d'énergie calorifique.

28. Méthode de transmission de données à des fins de télémétrie selon la revendication 1, **caractérisée en ce que** lesdites stations périphériques comprennent des moyens de blocage de fourniture, en particulier du gaz, de l'eau, de l'énergie électrique ou calorifique, sous la commande de la station centrale ou par des détecteurs de conditions anormales au voisinage des stations périphériques.

29. Appareil de transmission de données à des fins de télémétrie appliquant la méthode selon une ou plusieurs des revendications précédentes.
